(19) Europäisches Patentamt
European Patent Office
Office européen des brevets

(11) **EP 4 343 382 B1**

(12) **EUROPÄISCHE PATENTSCHRIFT**

(45) Veröffentlichungstag und Bekanntmachung des Hinweises auf die Patenterteilung:
**16.04.2025 Patentblatt 2025/16**

(21) Anmeldenummer: **23187145.0**

(22) Anmeldetag: **24.07.2023**

(51) Internationale Patentklassifikation (IPC):
**G01S 17/48** (2006.01)    **G01S 7/481** (2006.01)

(52) Gemeinsame Patentklassifikation (CPC):
**G01S 17/48; G01S 7/4814; G01S 7/4815**

(54) **OPTOELEKTRONISCHER SENSOR**

OPTOELECTRONIC SENSOR

CAPTEUR OPTOÉLECTRONIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **22.09.2022 DE 102022124438**

(43) Veröffentlichungstag der Anmeldung:
**27.03.2024 Patentblatt 2024/13**

(73) Patentinhaber: **SICK AG**
**79183 Waldkirch (DE)**

(72) Erfinder:
• KÖHL, Martin
  79183 Waldkirch (DE)
• MATTHES, Stephan
  79183 Waldkirch (DE)

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
EP-B1- 2 159 599       DE-A1- 102020 122 924
US-A1- 2002 180 987

**Beschreibung**

Die vorliegende Erfindung betrifft einen optoelektronischen Sensor zum Erfassen von Objekten nach dem Triangulationsprinzip mit einer Sendeanordnung zum Aussenden von Sendelichtsignalen entlang einer Sendeachse, wobei die Sendeanordnung zumindest eine Lichtquelle und eine Sendeoptik umfasst, welche zum Fokussieren der von der zumindest einen Lichtquelle erzeugten Sendesignale in einem Fokuspunkt eingerichtet ist, und mit einer eine Empfangsachse aufweisenden Empfangsanordnung, welche eine Empfangsoptik zum Formen von Empfangslichtsignalen, welche von einem Objekt durch Remission auftreffender Sendelichtsignale erzeugt werden, und einen ortsauflösenden Lichtempfänger zum Empfangen der geformten Empfangslichtsignale umfasst.

Bei einem derartigen optoelektronischen Sensor, der auch als Triangulationslichttaster oder allgemein als Triangulationssensor bezeichnet werden kann, sind die Lichtquelle und der Lichtempfänger einerseits und die Sendeoptik und die Empfangsoptik andererseits jeweils seitlich zueinander in der sogenannten Triangulationsrichtung versetzt, so dass die Sendeachse und die Empfangsachse nicht zusammenfallen. Eine derartige Konfiguration eines optoelektronischen Sensors wird auch als Biaxialanordnung bezeichnet.

Bei einem nach dem Triangulationsprinzip arbeitenden optoelektronischen Sensor besteht der Lichtempfänger aus wenigstens zwei fotosensitiven Empfangselementen oder ist als ein sogenannter Zeilensensor mit wenigstens einer Zeile von fotosensitiven Elementen ausgebildet.

In Abhängigkeit von der Entfernung zwischen dem Sensor und einem remittierenden Objekt ändert sich die Position eines Empfangslichtflecks, welcher von der Empfangsoptik durch Formen des remittierten, d.h. vom Objekt diffus oder spiegelnd reflektierten Lichts, auf dem Lichtempfänger erzeugt wird, in der Triangulationsrichtung. Zwischen dem Auftreffort des Empfangslichtflecks auf dem Lichtempfänger und der Entfernung des erfassten Objekts besteht ein eindeutiger geometrischer Zusammenhang. Durch Auswertung der Lichtverteilung auf dem Lichtempfänger kann der Abstand zwischen dem Sensor und dem Objekt ermittelt werden oder es kann festgestellt werden, ob sich ein erfasstes Objekt in einem vorgegebenen Abstand zum optoelektronischen Sensor befindet oder nicht.

Solche Sensoren werden dazu verwendet, gegebenenfalls in einem von dem Sensor erfassbaren Überwachungsbereich anwesende Objekte unter Berücksichtigung des Abstands eines Objekts von dem Sensor zu detektieren. Hierzu kann eine entsprechende Auswerteeinheit vorgesehen sein, welche zumindest mit dem Lichtempfänger verbunden ist und dazu eingerichtet ist, elektrische Empfangssignale, welche vom Lichtempfänger durch Umwandlung erfasster Empfangslichtsignale in elektrische Signale erzeugt wurden, zu verarbeiten und auf der Grundlage der elektrischen Empfangssignale ein entsprechendes Objekterfassungssignal zu erzeugen. Ein derartiges Objekterfassungssignal kann beispielsweise Informationen über den genannten Abstand des Objekts umfassen oder es kann auf der Grundlage eines Vergleichs mit einem Abstandsschwellenwert erzeugt werden. Ein solcher Vergleich kann beispielsweise eine Prüfung umfassen, ob ein ermittelter Objektabstand größer oder kleiner ist als ein vorgegebener Abstandsschwellenwert oder ob der ermittelte Objektabstand innerhalb oder außerhalb eines vorgegebenen Abstandsbereichs liegt.

Für eine zuverlässige Erfassung von Objekten ist es wünschenswert, dass die Sendelichtsignale möglichst fokussiert auf einem zu erfassenden Objekt auftreffen, d.h. dass ein durch die Sendelichtsignale auf dem Objekt erzeugter Sendelichtfleck einen möglichst geringen Durchmesser aufweist. Dadurch wird erreicht, dass einerseits ein von der Empfangsoptik auf dem Lichtempfänger erzeugter Empfangslichtfleck eine hohe lokale Energiedichte aufweist, was die Schaltpunktpräzision erhöht, und andererseits durch nicht homogen remittierende Objekte verursachte Fehler bei der Objekterfassung minimiert werden. Der Ort, an welchem der Lichtfleck einen minimalen Durchmesser aufweist, ist der genannte Fokuspunkt. Derjenige Ort auf der Empfangsachse, der dem Fokuspunkt am nächsten liegt, wird auch als Arbeitspunkt bezeichnet. Die Entfernung des Arbeitspunktes von dem optoelektronischen Sensor kann auch als Arbeitsabstand bezeichnet werden, wobei der Arbeitsabstand im Wesentlichen der Fokusweite des Fokuspunkts entspricht bzw. in einem trigonometrischen Zusammenhang zu diesem steht. Durch ein Verändern des Abstands zwischen der Lichtquelle und der Sendeoptik kann die Fokusweite und damit der Arbeitsabstand verändert werden.

Die Fokusweite ist nicht mit der Brennweite der Sendeoptik zu verwechseln und der Fokuspunkt entspricht dementsprechend auch nicht dem Brennpunkt der Sendeoptik. Vielmehr entspricht die Fokusweite der Bildweite, wenn man das Erzeugen eines Lichtflecks auf einem zu erfassenden Objekt im Fokuspunkt als eine Abbildung einer Lichtquelle auf dem zu erfassenden Objekt auffasst.

In Abhängigkeit von einer konkreten Anwendungssituation für einen Triangulationssensor ist es wünschenswert, den Arbeitsabstand bzw. die Fokusweite anpassen zu können, damit der Sensor nicht nur für einen fest vorgegebenen Arbeitsabstand eingesetzt werden kann, sondern innerhalb eines vorgegebenen Arbeitsabstandsbereichs. Ein solcher Arbeitsabstandsbereich kann sich beispielsweise zwischen wenigen Millimetern oder Zentimetern bis zu mehreren Dezimetern oder Metern oder sogar bis unendlich erstrecken.

Bei vielen herkömmlichen Triangulationssensoren besteht ein Nachteil darin, dass sich mit einer Änderung des Arbeitsabstandes bzw. der Fokusweite der Sendeanordnung nicht nur die Position des Fokuspunkts entlang der Richtung der Empfangsachse verändert, sondern auch in der quer zur Empfangsachse verlaufenden Triangulationsrichtung.

Dadurch wird die Position des Empfangslichtflecks auf dem Lichtempfänger ebenfalls in Triangulationsrichtung verschoben. Um bei solchen Triangulationssensoren einen möglichst großen Arbeitsabstandsbereich zu gewährleisten, müssen entsprechend lange Lichtempfänger eingesetzt werden, um in jedem Fall eine zuverlässige Erfassung des Empfangslichtflecks zu gewährleisten. Hierdurch werden die Kosten für den Sensor gesteigert und auch der notwendige Bauraum für die Komponenten des Sensors vergrößert.

Zur Anpassung des Arbeitsabstands sind im Stand der Technik verschiedene Ansätze beschrieben, die jedoch die geschilderte Problematik nicht oder nur teilweise lösen oder einen erheblichen Aufwand verursachen.

So offenbart DE 29 24 685 A1 eine Sensoranordnung, bei welcher die Sendeanordnung und die Empfangsanordnung mittels einer Getriebevorrichtung hinsichtlich ihrer Winkellage synchron zueinander verstellt werden können, so dass der Schnittpunkt von Sendeachse und Empfangsachse auf einer Symmetriegeraden liegt.

DE 100 06 321 A1 beschreibt ein Verfahren zur Herstellung einer optischen Überwachungseinrichtung, bei dem der Sender und/oder der Empfänger bzw. die Sendeoptik und/oder die Empfangsoptik in einer Ebene senkrecht zur optischen Achse auf eine maximale Sendeleistung im Zielgebiet bzw. eine maximale Empfangsleistung am Empfänger ausgerichtet und anschließend in dieser Position lagefixiert werden.

DE 198 21 112 C1 offenbart einen Lichttaster nach dem Triangulationsverfahren mit Tastenweitenverstellung, bei welchem die Sendelinse und die Empfängerlinse über ein Getriebe gekoppelt sind, so dass bei einer Verstellung die Sendelinse linear verschoben und synchron dazu die Empfängerlinse verschwenkt wird.

Bei dem in DE 10 2015 009 619 A1 offenbarten optischen Näherungsschalter ist der Lichtempfänger mittels einer Verstelleinheit in der Triangulationsrichtung verschiebbar.

EP 2 159 599 B1 offenbart einen Triangulationssensor, bei dem die Sendeachse und die Empfangsachse diagonal und symmetrisch in Bezug auf eine scheinbare optische Achse verlaufen. Die Sendeanordnung umfasst mehrere Lichtquellen, die in unterschiedlichen Abständen von der Sendelinse und der scheinbaren optischen Achse angeordnet sind, wobei zur Einstellung eines gewünschten Arbeitsabstands jeweils eine der Lichtquellen aktiviert wird. Da bei dieser Anordnung der Sendelichtfleck stets auf die scheinbare optische Achse abgebildet ist, wandert der Empfangslichtfleck aufgrund des Winkels zwischen der Empfangsachse und der scheinbaren optischen Achse bei Änderungen des Arbeitsabstands auf dem Lichtempfänger.

Es ist die Aufgabe der Erfindung, einen optoelektronischen Sensor zum Erfassen von Objekten nach dem Triangulationsprinzip anzugeben, bei welchem mit geringem Aufwand die Fokusweite der Sendeanordnung derart angepasst werden kann, dass der Auftreffpunkt eines auf dem Lichtempfänger erzeugten Empfangslichtflecks möglichst unabhängig oder, zumindest im Wesentlichen, unabhängig von der gewählten Fokusweite ist.

Die Lösung der Aufgabe erfolgt durch einen optoelektronischen Sensor mit den Merkmalen des Anspruchs 1. Erfindungsgemäß ist vorgesehen, dass eine Relativposition eines Austrittsorts der Sendelichtsignale aus der zumindest einen Lichtquelle bezogen auf die Sendeoptik derart wählbar ist, dass die Fokusweite, welche dem Abstand eines Fokuspunkts von der Sendeoptik entspricht, auf einen gewünschten Wert einstellbar ist, wobei sich die verschiedenen Relativpositionen auf einer Positionierungskurve befinden, welche derart gewählt ist, dass jeweilige der Positionierungskurve zugeordnete Fokuspunkte für verschiedene Fokusweiten auf einer Fokuspunktlinie liegen, wobei der Abstand der Fokuspunktlinie von der Empfangsachse zumindest innerhalb eines vorgegebenen Arbeitsabstandsbereichs minimiert ist.

Bei der zumindest einen Lichtquelle kann es sich beispielsweise um eine Punktlichtquelle mit kleiner Lichtaustrittsfläche und divergentem Lichtaustritt handeln. Auf den Einsatz von kostenintensiven Laserlichtquellen kann verzichtet werden.

Als Lichtempfänger kann ein Lichtempfänger mit verhältnismäßig niedriger Ortsauflösung verwendet werden, beispielsweise ein sogenannter Doppelelementsensor oder Differenzsensor mit nur zwei lichtempfindlichen Elementen. Des Weiteren kann auch ein Zeilensensor mit verhältnismäßig wenigen lichtempfindlichen Elementen bzw. kurzer Baulänge zum Einsatz kommen. Hierdurch verringert sich auch der Aufwand für eine nachgeschaltete Signalverarbeitung der elektronischen Empfangssignale.

Wie bereits erläutert wurde, definiert die genannte Fokusweite zumindest im Wesentlichen einen Arbeitspunkt des Sensors, welcher auch als derjenige Ort im Bereich der eingestellten Fokusweite bzw. im Bereich des Fokuspunkts definiert werden kann, an dem ein zu erfassendes Objekt erwartet wird. Die Fokuspunktlinie beschreibt die Positionen der Fokuspunkte für verschiedene Fokusweiten und kann daher auch etwas ungenau als Arbeitspunktlinie bezeichnet werden. Die genannte Relativposition kann veranschaulichend zum Beispiel als eine Position in einem zweidimensionalen Koordinatensystem aufgefasst werden, beispielsweise einem kartesischen Koordinatensystem, dessen eine Achse beispielsweise in der Triangulationsrichtung und dessen andere Achse in einer dazu senkrechten, im Wesentlichen parallel zur Empfangsachse verlaufenden Richtung verläuft. Der Ursprung dieses Koordinatensystems kann wahlweise in die Lichtquelle oder in die Sendeoptik gelegt werden. Die Relativposition gibt dann die Koordinaten in diesem Koordinatensystem für die Position des jeweils anderen Elements, d.h. der Sendeoptik bzw. der Lichtquelle, an und beschreibt somit den Abstand zwischen der Lichtquelle bzw. dem Lichtaustrittsort und der Sendeoptik in Richtung der Empfangsachse sowie den lateralen Versatz in der Triangulationsrichtung. Die Koordinaten verschiedener Relativpositionen unterscheiden sich folglich zumindest in einer, in der Regel in beiden Dimensionen.

Ein Wählen oder auch ein Ändern der Relativposition erfolgt insbesondere durch ein Verändern der Position der Sendeoptik bei einem ortsfesten Lichtaustrittsort der Lichtquelle oder durch ein Verändern der Position des Lichtaustrittsorts der Lichtquelle bei einer ortsfesten Sendeoptik, was nachfolgend noch näher erläutert wird. Der Ausdruck "ortsfest" kann beispielsweise als "relativ zu einem Gehäuse der Sensoranordnung fest" oder auch als "relativ zu einer tragenden Struktur fest, die nicht notwenderweise ortsfest in Bezug auf ein Gehäuse der Sensoranordnung ist", verstanden werden. Das Ändern oder Wählen der Relativposition zwischen dem Austrittsort der Sendelichtsignale und der Sendeoptik kann sowohl stufenlos als auch in diskreten Schritten erfolgen. Durch ein Ändern der Relativposition sowohl in Richtung der Empfangsachse als auch in einer Querrichtung hierzu, d.h. in der Triangulationsrichtung, kann der Relativwinkel zwischen der Sendeachse und der Empfangsachse derart verändert werden, dass der Fokuspunkt auf oder nahe der Empfangsachse gehalten wird, so dass der Auftreffort des Empfangslichtflecks auf dem Lichtempfänger bei einem Verändern der Fokusweite zumindest innerhalb des Arbeitsabstandsbereichs im Wesentlichen unverändert bleibt.

Diese Wirkung wird gemäß der vorliegenden Erfindung durch das Minimieren des Abstands der Fokuspunktlinie von der Empfangsachse über einen möglichst großen Arbeitsabstandsbereich erzielt. Dies kann insbesondere dadurch erfolgen, dass die Positionierungskurve unter Berücksichtigung der verschiedenen geometrischen Parameter in einer mathematisch exakten Weise berechnet wird. Alternativ kann auch eine vereinfachte Näherungslösung für die Positionierungskurve berechnet werden, beispielsweise unter Anwendung eines mathematischen Optimierungsverfahrens oder durch andere bekannte Näherungsverfahren. Somit kann die Fokuspunktlinie zumindest innerhalb des vorgegebenen Arbeitsabstandsbereichs mit der Empfangsachse zusammenfallen, d.h. der Abstand zwischen der Fokuspunktlinie und der Empfangsachse beträgt Null, oder es wird zumindest ein bestimmter vorgegebener Maximalabstand zwischen der Fokuspunktlinie und der Empfangsachse nicht überschritten. In beiden Fällen kann ein bestimmter Fokusweitenbereich bzw. Arbeitsabstandsbereich von der Minimierung ausgenommen sein, zum Beispiel ein extremer Nahbereich, für den aufgrund von technischen und/oder geometrischen Beschränkungen eine Minimierung nicht mehr umsetzbar ist. Somit kann der vorgegebene Arbeitsabstandsbereich kleiner sein als ein maximal möglicher Arbeitsabstandsbereich, welcher z.B. durch die äußersten Verstellpositionen der Lichtquelle bzw. der Sendeoptik begrenzt sein kann, z.B. ein Bereich zwischen den Endpunkten der Positionierungskurve.

Da bei dem erfindungsgemäßen Sensor zumindest ein Großteil aller möglichen Fokuspunkte auf oder nahe bei der Empfangsachse liegt, trifft nach der Einstellung des Sensors auf einen jeweiligen gewünschten Arbeitspunkt, bei welcher die dem gewünschten Arbeitspunkt zumindest annähernd entsprechende Fokusweite eingestellt wird, ein Empfangslichtfleck, der von einem sich im eingestellten Arbeitspunkt befindenden Objekt erzeugt wird, stets annähernd an der gleichen Stelle auf den Lichtempfänger. Deshalb kann ein vergleichsweise kompakter Lichtempfänger, insbesondere sogar ein Zwei-Element-Empfänger, verwendet werden. Ohne die erfindungsgemäße Anpassung der Relativposition zwischen Lichtaustrittsort und Sendelinse bei einer Änderung der Fokusweite würde sich der Auftreffort des Empfangslichtflecks auf dem Lichtempfänger, bezogen jeweils auf ein Objekt, das sich an dem durch die eingestellte Fokusweite definierten Arbeitspunkt befindet, entlang der Triangulationsrichtung verschieben.

Gemäß einer bevorzugten Ausführungsform der Erfindung verläuft die Positionierungskurve entlang einer Geraden. Ein derartiger geradliniger Verlauf der Positionierungskurve ist ein Beispiel für eine vereinfachte Näherungslösung. Alternativ kann die Positionierungskurve auch einen gekrümmten Verlauf aufweisen und zum Beispiel durch ein Polynom zweiter oder höherer Ordnung definiert sein.

Gemäß einer weiteren bevorzugten Ausführungsform der Erfindung ist vorgesehen, dass die Sendeoptik eine Optikebene aufweist, dass die Positionierungskurve der Relativpositionen in einer Sendebene verläuft, dass die Empfangsachse und/oder die Fokuspunktlinie in einer Empfangsebene verlaufen und dass sich die Sendeebene, die Optikebene und die Empfangsebene in einer gemeinsamen Schnittgeraden schneiden. Unter der Optikebene wird in diesem Zusammenhang eine Haupterstreckungsebene oder Hauptebene der Sendeoptik verstanden. In dieser Ausgestaltung erfüllen die Optikebene, die Sendeebene und die Empfangsebene die Bedingungen der Scheimpflugschen Regel. Bei einer derartigen Konfiguration befinden sich definitionsgemäß die Lichtaustrittsorte der Sendelichtsignale für die verschiedenen Relativpositionen in der Sendeebene, die auch als Schärfeebene bezeichnet werden kann. Entsprechend werden der oder die Lichtquellen unabhängig von ihrer Position in der Sendeebene scharf in die Empfangsebene abgebildet, wobei die Empfangsebene auch als Bildebene bezeichnet werden kann. Bei einer derartigen Scheimpflug-Anordnung muss nur eine Relativposition für eine jeweils gewünschte Fokusweite bzw. einen gewünschten Arbeitsabstand ausgewählt werden. Die Konfiguration des Sensors gemäß der Scheimpflugschen Regel gewährleistet dann automatisch, dass die zugehörigen Fokuspunkte stets auf der Empfangsachse oder zumindest auf der im Wesentlichen mit der Empfangsachse identischen Fokuspunktlinie befinden. Bevorzugt verlaufen die Empfangsachse und die Fokuspunktlinie in einer Empfangsebene, welche damit auch als gemeinsame Empfangsebene bezeichnet werden kann.

Gemäß einer weiteren bevorzugten Ausführungsform der Erfindung umfasst die Sendelichtanordnung eine Lichtquelle, welche entlang der Positionierungskurve verschiebbar ist, oder die Sendelichtanordnung umfasst eine Sendeoptik, welche entlang der Positionierungskurve verschiebbar ist. Die Positionierungskurve ist sozusagen eine Trajektorie, auf welcher die Lichtquelle bzw. die Sendeoptik verschoben werden kann. Wie eingangs bereits erläutert wurde, kann sich die Verschiebbarkeit der Lichtquelle bzw. der Sendeoptik auf ein Gehäuse des optoelektronischen Sensors oder auf eine innerhalb des Gehäuses vorgesehene tragende Struktur beziehen, in welchem bzw. an welcher im ersten Fall die Sendeoptik und im zweiten Fall die Lichtquelle und in beiden Fällen gegebenenfalls auch der Lichtempfänger und/oder die Empfangsoptik ortsfest angeordnet sein können. Die mindestens eine Lichtquelle befindet sich bevorzugt in der Sendeebene. Besonders bevorzugt ist genau eine Lichtquelle vorgesehen.

Erfindungsgemäß sind die Lichtquelle und der Lichtempfänger in einer Triangulationsrichtung voneinander beabstandet auf einem gemeinsamen Trägermodul angeordnet. Bei dem genannten Trägermodul kann es sich beispielsweise um eine Leiterplatte oder Elektronikkarte handeln. Durch eine Vereinigung der beiden genannten elektrischen Bauteile auf einem gemeinsamen Trägermodul lassen sich die Herstellungs- und Montagekosten gegenüber einer Lösung mit zwei getrennten Trägermodulen bzw. Leiterplatten deutlich verringern.

Gemäß einer weiteren bevorzugten Ausführungsform der Erfindung ist das Trägermodul entlang der Positionierungskurve verschiebbar. Somit wird die Lichtquelle gemeinsam mit dem Lichtempfänger entlang der Positionierungskurve oder Trajektorie verschoben.

Gemäß einer weiteren bevorzugten Ausführungsform der Erfindung ist die Empfangsoptik derart mit dem Trägermodul gekoppelt, dass sich bei einem Verschieben des Trägermoduls die Winkellage der Empfangsachse nicht ändert. Mit anderen Worten wird die Empfangsachse lediglich parallel versetzt und nicht gekippt. Die Empfangsoptik wird somit parallel zur Positionierungskurve verschoben. Die Empfangsoptik muss jedoch nicht starr mit dem Trägermodul verbunden sein, sondern es kann beispielsweise eine Verschiebbarkeit der Empfangsoptik in Richtung der Empfangsachse vorgesehen sein, um ggf. den Fokus für den Empfangslichtfleck auf dem Lichtempfänger justieren zu können.

Gemäß einer weiteren vorteilhaften Ausführungsform der Erfindung ist die Positionierungskurve durch eine lineare oder nichtlineare Approximationsfunktion definiert, welche bevorzugt eine ideale Positionierungskurve in einem Berührungspunkt tangential berührt, wobei die ideale Positionierungskurve durch diejenigen Relativpositionen definiert ist, für welche die Fokuspunktlinie mit der Empfangsachse zusammenfällt. Wenn es für den gewünschten Einsatzzweck nicht erforderlich ist, dass die Fokuspunktlinie mit der Empfangsachse exakt zusammenfällt, sondern innerhalb gewisser Grenzen eine Abweichung der Fokuspunktlinie von der Empfangsachse toleriert werden kann, die einen vorgegebenen Maximalwert nicht überschreitet, kann es aus konstruktiven oder fertigungstechnischen Gründen wünschenswert sein, den Verlauf der realen Positionierungskurve oder der Trajektorie zu vereinfachen. Die genannte lineare oder nichtlineare Approximationsfunktion kann beispielsweise durch eine Reihenentwicklung einer Funktion ermittelt werden, welche die ideale Positionierungskurve beschreibt, zum Beispiel in Form einer Taylor-Reihe oder einer Laurent-Reihe. Vorzugsweise weist die durch eine lineare Approximationsfunktion beschriebene Positionierungskurve, d.h. die reale Positionierungskurve, die Form einer Tangente an die ideale Positionierungskurve auf. Alternativ kann die durch die lineare oder nichtlineare Approximationsfunktion beschriebene reale Positionierungskurve durch eine Kurve definiert sein, welche die ideale Positionierungskurve in zwei Punkten schneidet, insbesondere durch eine Sekante der idealen Positionierungskurve. Sofern die reale Positionierungskurve durch eine nichtlineare Approximationsfunktion beschrieben werden soll, kann dies beispielsweise durch eine Polynomfunktion bzw. eine Reihenentwicklung erfolgen, deren Ordnung kleiner ist als die Ordnung derjenigen Funktion, welche die ideale Positionierungskurve beschreibt.

In dem Zusammenhang ist es bevorzugt, wenn der Berührungspunkt für diejenige Relativposition ausgewählt ist, für welche die Fokusweite unendlich ist oder einem vorgegebenen Referenzarbeitspunkt entspricht. Die Fokusweite für den genannten Referenzarbeitspunkt ist hierbei kleiner als unendlich. Die Auswahl des Referenzarbeitspunkts steht hierbei in einem Zusammenhang mit dem gewünschten vorgegebenen Arbeitsabstandsbereich. Während für einen Referenzarbeitspunkt, der nahe bei oder im Unendlichen liegt, der Arbeitsabstandsbereich eher für einen Fernbereich optimiert ist, d.h. der Abstand zwischen der Fokuspunktlinie und der Empfangsachse insbesondere für größere Fokusweiten minimiert ist, kann bei einem relativ nahe am Sensor vorgesehenen Referenzarbeitspunkt eine besonders gute Approximation für den Nahbereich erzielt werden, so dass der Abstand zwischen der Fokuspunktlinie und der Empfangsachse insbesondere für kleinere Fokusweiten minimiert ist.

Gemäß einer bevorzugten Ausführungsform der Erfindung ist der Berührungspunkt der Approximationsfunktion derart ausgewählt, dass für den ausgewählten Berührungspunkt ein maximaler Abstand der zugeordneten Fokuspunktlinie von der Empfangsachse innerhalb des vorgegebenen Arbeitsabstandsbereichs minimal wird. Hierdurch wird ein Optimierungsverfahren implementiert, bei dem für einen vorgegebenen oder gewünschten Arbeitsabstandsbereich, für den der optoelektronische Sensor optimiert sein soll, derjenige Berührungspunkt zwischen der Approximationsfunktion und der idealen Positionierungskurve ermittelt wird, in dem der maximale Abstand zwischen der zugeordneten Fokuspunktlinie von der Empfangsachse einen möglichst kleinen Wert annimmt. Mit anderen Worten werden die Fokuspunktlinie und die Empfangsachse bestmöglich aneinander angepasst.

Gemäß einer weiteren bevorzugten Ausführungsform der Erfindung ist der Abstand der Fokuspunktlinie von der Empfangsachse zusätzlich mittels eines Verschiebens und/oder eines Verkippens der Empfangsachse minimiert. Wie nachfolgend noch näher erläutert wird, kann insbesondere für einen Referenzarbeitspunkt, welcher im Unendlichen liegt, die Fokuspunktlinie einen hyperbelähnlichen Verlauf aufweisen. Bei einem solchen Verlauf nimmt der Abstand zwischen der Fokuspunktlinie und der Empfangsachse zu kleineren Fokusweiten hin kontinuierlich zu. Durch ein Verschieben und/oder Verkippen der Raumlage der Empfangsachse können die absoluten Abweichungen der verschiedenen Fokuspunkte von der Empfangsachse noch weiter minimiert werden, wobei das Anpassen z.B. durch eine Ausgleichsrechnung erfolgen kann.

Gemäß einer nicht beanspruchten Ausgestaltung umfasst die Sendeanordnung mehrere Lichtquellen, welche entlang der Positionierungskurve voneinander beabstandet angeordnet sind, wobei das Wählen einer jeweiligen Relativposition derart erfolgt, dass nur die an dieser Relativposition angeordnete Lichtquelle aktiviert ist und die übrigen Lichtquellen deaktiviert sind. Die mehreren Lichtquellen sind ortsfest angeordnet, bevorzugt in einer Sendeebene. Dadurch kann eine mechanische Verschiebung der Lichtquelle bzw. der Sendeoptik entfallen. In dem Zusammenhang hat es sich als vorteilhaft erwiesen, wenn auch für diese Ausgestaltung die Sendeebene, die Optikebene und die Empfangsebene sich in einer gemeinsamen Schnittgeraden schneiden. Die genannten Ebenen, welche bereits vorstehend definiert wurden, erfüllen somit die Bedingungen der Scheimpflugschen Regel.

Weitere Vorteile ergeben sich aus der folgenden Zeichnungsbeschreibung. In den Zeichnungen sind Ausführungsbeispiele dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1　　　　eine schematische Querschnittsdarstellung eines optoelektronischen Sensors gemäß einem nicht beanspruchten ersten Ausführungsbeispiel;

Fig. 2　　　　eine schematische Querschnittsdarstellung eines optoelektronischen Sensors gemäß einem nicht beanspruchten zweiten Ausführungsbeispiel;

Fig. 3 und 4　　schematische Querschnittsdarstellungen eines optoelektronischen Sensors gemäß einem einer erfindungsgemäßen Ausgestaltung entsprechenden dritten Ausführungsbeispiel in unterschiedlichen Betriebszuständen;

Fig. 5 bis 7　　schematische Querschnittsdarstellung eines optoelektronischen Sensors gemäß einem einer anderen erfindungsgemäßen Ausgestaltung entsprechenden vierten Ausführungsbeispiel in unterschiedlichen Betriebszuständen; und

Fig. 8 bis 12　verschiedene schematische Darstellungen von Strahlengängen.

Im Folgenden werden für gleiche oder gleichartige Elemente oder Komponenten die gleichen Bezugszeichen verwendet. In den Figuren sind die Dimensionen und Abstände der verschiedenen Elemente und Komponenten nicht maßstabsgetreu und zur Verdeutlichung der erfindungsgemäßen Effekte zum Teil um ein Vielfaches vergrößert dargestellt.

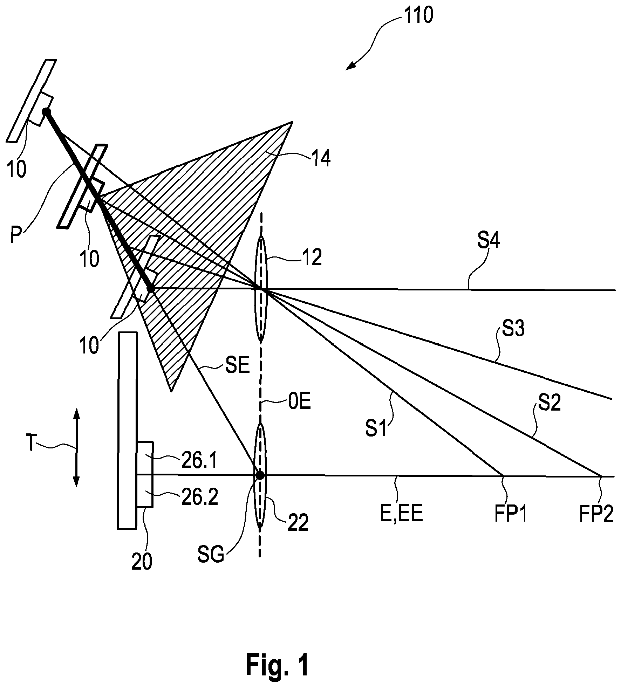

In Fig. 1 ist ein nach dem Triangulationsprinzip arbeitender optoelektronischer Sensor 110 gemäß einem nicht beanspruchten ersten Ausführungsbeispiel dargestellt. Der Sensor 110 umfasst eine Lichtquelle 10, welche divergentes Sendelicht 14 aussendet und entlang einer Positionierungskurve P verschiebbar ist. Die Positionierungskurve P ist durch eine Mehrzahl von diskreten Relativpositionen oder auch einer kontinuierlich veränderlichen Relativposition definiert. In Abhängigkeit von der Relativposition, auf welcher sich die Lichtquelle 10 befindet, wird das Sendelicht 14 von einer Sendeoptik 12 in einen jeweiligen Fokuspunkt FP fokussiert. In Abhängigkeit von der gewählten Relativposition auf der Positionierungskurve P breitet sich das Sendelicht 14 entlang einer jeweiligen Sendelichtachse S1 bis S4 aus. Jeder Sendeachse S1 bis S4 ist entsprechend dem Index ein jeweiliger Fokuspunkt FP1 bis FP4 zugeordnet, wobei sich die Fokuspunkte FP3 und FP4 außerhalb des Zeichenbereichs finden und daher in Fig. 1 nicht dargestellt sind.

Der Sensor 110 umfasst ferner einen Lichtempfänger 20, welcher in diesem und allen weiteren Ausführungsbeispielen als Zwei-Element-Lichtempfänger mit einem Fernelement 26.1 und einem Nahelement 26.2 dargestellt ist. Anstelle eines solchen Zwei-Element-Empfängers kann auch ein sich in Triangulationsrichtung T erstreckender Zeilenempfänger verwendet werden. Der Lichtempfänger 20 und eine zugeordnete Empfangsoptik 22 definieren eine Empfangsanordnung mit einer Empfangsachse E, welche als optische Achse oder Hauptachse der Empfangsanordnung bezeichnet werden kann. Wenn das Sendelicht 14 auf ein sich im Bereich der Empfangsachse E befindendes Objekt trifft, wird es als Empfangslicht remittiert und von der Empfangsoptik 22 zu einem Empfangslichtfleck auf dem Lichtempfänger 20 geformt.

Die Sendeoptik 12 weist eine Hauptebene oder Optikebene OE auf, welche im Ausführungsbeispiel nur zufällig mit der Hauptebene der Empfangsoptik 22 zusammenfällt. Die Positionierungskurve P ist hier in einer Sendeebene SE gewählt und die Empfangsachse E verläuft in einer Empfangsebene EE. Die Empfangsebene EE, die Optikebene OE und die Sendeebene SE schneiden sich in einer Schnittgeraden SG, wobei aufgrund der Schnittdarstellung von Fig. 1 die genannten Ebenen EE, OE, SE als Geraden und die Schnittgerade SG als Punkt erkennbar sind. Die Empfangsebene EE, die Optikebene OE und die Sendeebene SE erfüllen somit die Scheimpflugsche Bedingung. Dies führt dazu, dass die punktförmige Lichtquelle 10 unabhängig von ihrer Relativposition in der Sendeebene SE stets scharf in einen auf der Empfangsebene EE bzw. der Empfangsachse E liegenden Fokuspunkt FP1,...., FP4 abgebildet wird. Der Abstand zwischen der Sendeoptik 12 und einem jeweiligen Fokuspunkt FP1 bis FP4 wird als Fokusweite bezeichnet. Der Abstand zwischen den Fokuspunkten FP1 bis FP4 und der Empfangsoptik 22 wird als Arbeitsabstand bezeichnet, wobei der Arbeitsabstand gemäß den zugrundeliegenden trigonometrischen Beziehungen aus der Fokusweite abgeleitet werden kann.

Die Sendeoptik 12 erzeugt auf einem Objekt (nicht dargestellt), welches sich beispielsweise exakt in einem Arbeitsabstand befindet, welcher durch den Fokuspunkt FP1 definiert ist, einen fokussierten Sendelichtfleck genau im Schnittpunkt zwischen der Sendeachse S1 und der Empfangsachse E, also im Fokuspunkt FP1, so dass der von der Empfangsoptik 22 als Abbildung des Sendelichtflecks erzeugte Empfangslichtfleck unmittelbar auf die Grenze zwischen dem Fernelement 26.1 und dem Nahelement 26.2 fällt. Ist der Abstand des Objekts von der Empfangsoptik 22 weiter entfernt als der Arbeitsabstand für den Fokuspunkt FP1, so wandert der Sendelichtfleck auf dem Objekt nach unten (bezogen auf die Zeichenebene), so dass der Empfangslichtfleck auf dem Lichtempfänger 20 nach oben in Richtung des Fernelements 26.1 wandert. Befindet sich das Objekt hingegen näher an der Empfangsoptik 22 als der Arbeitsabstand, trifft der Sendelichtfleck oberhalb der Empfangsachse E auf das Objekt, so dass der Empfangslichtfleck auf dem Lichtempfänger 20 nach unten in Richtung des Nahelements 26.2 wandert. Die Richtung, in welcher der Empfangslichtfleck auf dem Lichtempfänger 20 in Abhängigkeit von dem Abstand des Objekts wandert, wird als Triangulationsrichtung T bezeichnet. Diese verläuft hier in der Figurenebene senkrecht zur Empfangsachse E.

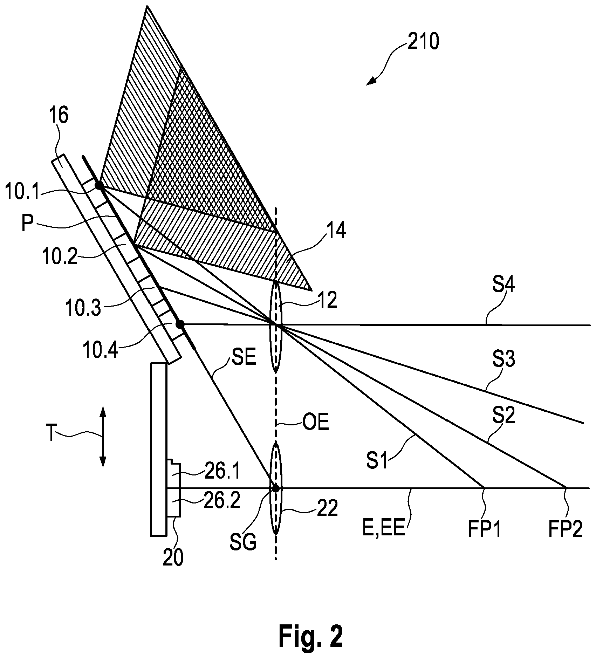

In Fig. 2 ist ein optoelektronischer Sensor 210 gemäß einem nicht beanspruchten zweiten Ausführungsbeispiel dargestellt, welcher dem optoelektronischen Sensor 110 von Fig. 1 ähnelt, so dass nachfolgend nur die wesentlichen Unterschiedsmerkmale erläutert werden.

Anstelle der beim Sensor 110 (Fig. 1) vorgesehenen einzigen Lichtquelle 10, welche entlang der Positionierungskurve P verschiebbar angeordnet ist, sind bei dem Sensor 210 (Fig. 2) insgesamt vier punktförmige Lichtquellen 10.1 bis 10.4 ortsfest entlang der Positionierungskurve P verteilt auf einer gemeinsamen Leiterplatte oder einem gemeinsamen Trägermodul 16 angeordnet. Entsprechend der Indexzahl ist jeder Lichtquelle 10.1 bis 10.4 eine Sendeachse S1 bis S4 und ein Fokuspunkt FP1 bis FP4 zugeordnet, wobei die Fokuspunkte FP3 und FP4 wiederum außerhalb der Zeichenebene liegen. Zum Einstellen einer gewünschten Fokusweite bzw. eines gewünschten Arbeitsabstandes wird jeweils eine der Lichtquellen 10.1 bis 10.4 aktiviert, während alle übrigen Lichtquellen deaktiviert bleiben.

Ein Vorteil des Sensors 210 gegenüber dem Sensor 110 besteht darin, dass keine mechanischen Komponenten zur Durchführung der Verschiebung benötigt werden, sondern die Einstellung des Arbeitsabstandes ausschließlich auf elektronischem Wege erfolgen kann.

Gemäß einer Abwandlung können die Lichtquellen 10.1 bis 10.4 in Richtung auf die Empfangsachse E geneigt auf dem Trägermodul 16 montiert sein. Dadurch kann der Anteil des von der Sendeoptik 12 erfassten Sendelichts 14 erhöht werden.

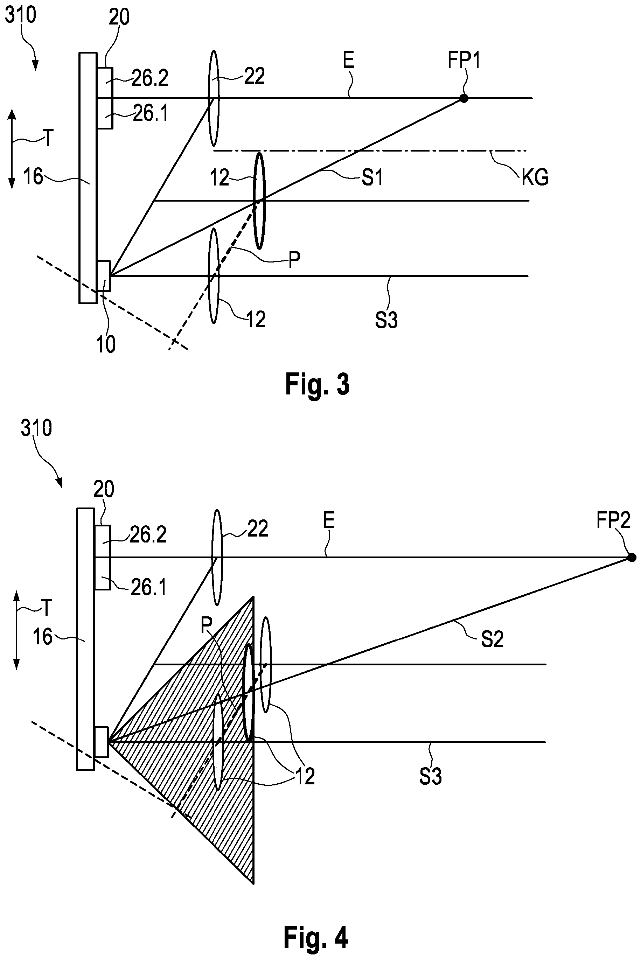

In Fig. 3 und 4 ist eine optoelektronische Sensoranordnung 310 gemäß einem einer erfindungsgemäßen Ausgestaltung entsprechenden dritten Ausführungsbeispiel dargestellt. Bei dem optoelektronischen Sensor 310 sind der Lichtsender 10 und der Lichtempfänger 20 mit einem festen Basisabstand in der Triangulationsrichtung T voneinander beabstandet auf einem gemeinsamen Trägermodul 16 angeordnet. Die Empfangsoptik 22 kann ebenfalls starr mit dem Trägermodul 16 verbunden sein, entweder direkt oder indirekt über ein nicht dargestelltes Gehäuse oder eine innerhalb des Gehäuses vorgesehene ebenfalls nicht dargestellte tragende Struktur, die nicht notwendigerweise ortsfest bezogen auf das Gehäuse sein muss. Gegebenenfalls kann eine Verschiebbarkeit der Empfangsoptik 22 entlang der Empfangsachse E gegeben sein, um den Fokus des Empfangslichtflecks anpassen zu können. Die Ausrichtung in der Triangulationsrichtung T ist jedoch fest, so dass sich die Winkelausrichtung der Empfangsachse E nicht verändern lässt. Die Sendeoptik 12 hingegen ist relativ zur Lichtquelle 10 entlang einer Positionierungskurve P verschiebbar angeordnet, welche geneigt zur Empfangsachse E und zur Triangulationsrichtung T verläuft. In Fig. 3 ist die Sendeoptik 12 in zwei verschiedenen Relativpositionen dargestellt, welche jeweils Maximalpositionen darstellen und somit Endpunkte der Positionierungskurve P definieren.

In Fig. 4 ist die Sendeoptik 12 zusätzlich in einer Zwischenposition zwischen diesen beiden Maximalpositionen dargestellt. In Abhängigkeit von der gewählten Relativposition breitet sich das Sendelicht entlang einer der drei in Fig. 3 und 4 dargestellten Sendeachsen S1 bis S3 aus, wobei jeder Sendeachse S1 bis S3 entsprechend dem Index wieder ein jeweiliger Fokuspunkt FP1 bis FP3 zugeordnet ist. Der der Sendeachse S3 zugeordnete Fokuspunkt FP3 befindet sich in unendlicher Entfernung und ist daher in der Zeichnung nicht dargestellt. Während der Fokuspunkt FP3 einen maximalen Arbeitsabstand definiert, definiert der Fokuspunkt FP1 einen minimalen Arbeitsabstand. Der minimale Arbeitsabstand ist im vorliegenden Ausführungsbeispiel durch eine mit strichpunktierter Linie dargestellte Kollisionsgrenze KG bestimmt. Solange sich die Sendeoptik 12 vollständig unterhalb der Kollisionsgrenze KG befindet, findet in der Triangulationsrichtung T betrachtet keine Überschneidung zwischen den Strahlengängen der Empfangsoptik 22 und der Sendeoptik 12 statt, in Richtung der Empfangsachse E betrachtet.

Die exakte Ermittlung der Lage und Ausrichtung der Positionierungskurve P wird nachfolgend noch näher beschrieben.

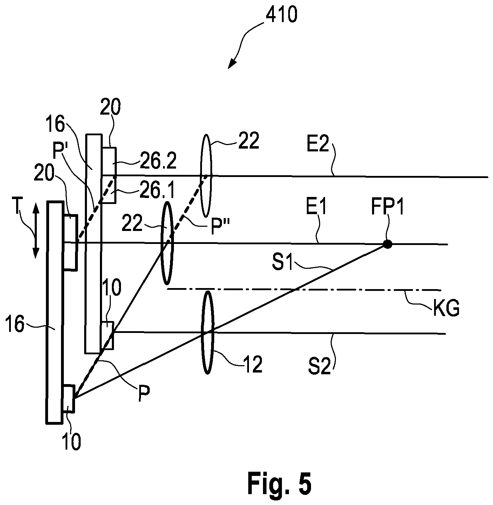

In Fig. 5 bis 7 ist ein optoelektronischer Sensor 410 gemäß einem einer anderen erfindungsgemäßen Ausgestaltung entsprechenden vierten Ausführungsbeispiel dargestellt. Die Anordnung der Komponenten des Sensors 410 gleicht der Anordnung beim Sensor 310 (Fig. 3 und 4), weshalb nachfolgend lediglich auf die wesentlichen Unterschiede eingegangen wird.

Während bei dem optoelektronischen Sensor 310 (Fig. 3 und 4) lediglich die Sendeoptik 12 entlang der Positionierungskurve P verschiebbar ausgeführt ist und die übrigen Komponenten der Sende- und Empfangsanordnung ortsfest sind, verhält es sich bei dem optoelektronischen Sensor 410 (Fig. 5 bis 7) genau umgekehrt. Somit ist die Sendeoptik 12 ortsfest angeordnet, während das Trägermodul 16 mit der Lichtquelle 10 und dem Lichtempfänger 20 sowie die Empfangsoptik 22 verschiebbar ausgeführt sind. In Fig. 5 sind das Trägermodul 16 und die Sendeoptik 22 in den jeweiligen Endpositionen dargestellt. Die Verschiebung der Lichtquelle 10 erfolgt entlang der Positionierungskurve P, wobei sich aufgrund der mechanischen Kopplung für die Verschiebung des Lichtempfängers 20 eine Positionierungskurve P' und für die Verschiebung der Empfangsoptik 22 eine Positionierungskurve P" ergibt, welche zum besseren Verständnis ebenfalls in Fig. 5 eingezeichnet sind. Die Trajektorien oder Positionierungskurven P, P', P" weisen die gleiche Länge und Ausrichtung auf und unterscheiden sich lediglich in ihrer Position.

Für eine erste Endposition, bei der der Arbeitsabstand minimal ist, ergibt sich eine Sendeachse S1, welche die zugehörige Empfangsachse E1 im Fokuspunkt FP1 schneidet. Für die entgegengesetzte Endposition verläuft die Sendeachse S2 parallel zu der zugehörigen Empfangsachse E2, so dass der sich daraus ergebende Fokuspunkt FP2 im Unendlichen liegt und somit in Fig. 5 nicht dargestellt ist.

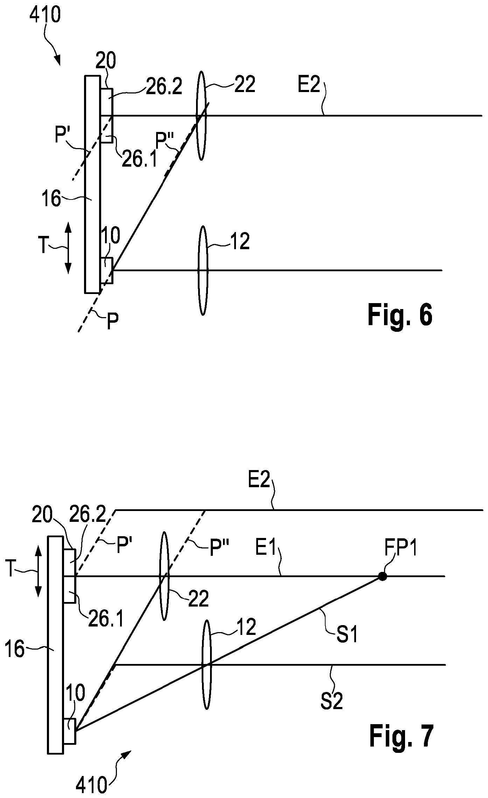

Wie in Fig. 5 und auch in Fig. 7 gut zu erkennen ist, verschiebt sich hierbei im Gegensatz zum dritten Ausführungsbeispiel (Fig. 3 und 4) die Empfangsachse E zwischen den Extrempositionen E1 und E2. Diese Verschiebung ist im praktischen Betrieb jedoch hinnehmbar.

Für eine bessere Übersicht sind in Fig. 6 und 7 das Trägermodul 16 mit der Lichtquelle 10 und dem Lichtempfänger 20 sowie die Empfangsoptik 22 jeweils nochmal separat in ihrer jeweiligen Extremposition einschließlich der zugehörigen Achsen dargestellt. In Fig. 6 ist die Konfiguration für den Fall mit unendlichem Arbeitsabstand dargestellt, während Fig. 7 die Konfiguration für den Fall mit minimalem Arbeitsabstand gezeigt ist, wobei hier zusätzlich auch die Sendeachse S2 und die Empfangsachse E2 für einen unendlichen Arbeitsabstand gezeigt sind.

Für die optoelektronischen Sensoren 310, 410 gilt, dass insbesondere bei Verwendung eines Zwei-Element-Lichtempfängers das Justieren auf einen gewünschten Arbeitsabstand durch Ändern der Relativposition zwischen der Lichtquelle 10 und der Sendeoptik 12 aus praktischen Gründen nicht mit dem Ziel erfolgt, dass ein Sendelichtfleck mit minimalem Durchmesser auf einem im Arbeitsabstand angeordneten Testobjekt erzeugt wird. Vielmehr wird ein Testobjekt im gewünschten Arbeitsabstand positioniert und anschließend die Relativposition zwischen der Lichtquelle 10 und der Sendeoptik 12 solange verschoben, bis der Empfangslichtfleck eine definierte Energieverteilung auf dem Lichtempfänger erzeugt. Für den beispielhaft verwendeten Zwei-Element-Empfänger 20 wäre dies typischerweise der Fall, wenn 50% der Intensität auf das Fernelement 26.1 und die übrigen 50% auf das Nahelement 26.2 auftreffen. Falls die Fokuspunkte nicht exakt auf der Empfangsachse liegen, kann es bei diesem Justierverfahren unter Umständen zu einer geringfügigen Defokussierung des Sendelichtflecks kommen, die jedoch hinnehmbar ist.

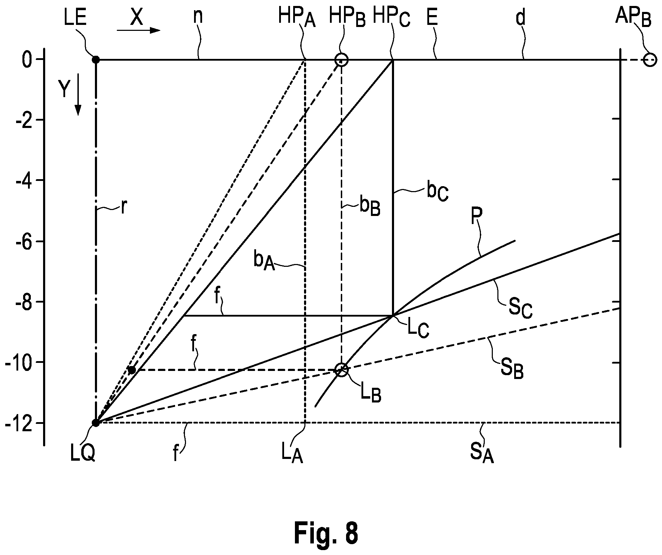

Nachfolgend werden mit Bezug auf Fig. 8 bis 12 Berechnungen erläutert, um einerseits für gegebene optische und geometrische Parameter eine exakte Funktion zur Beschreibung der idealen Positionierungskurve P und andererseits auch Approximationsfunktionen AF1, AF2 zur Beschreibung einer vereinfachten oder realen Positionierungskurve ermittelt werden können. Hierfür wird vereinfachend angenommen, dass die Sendeoptik eine dünne Linse ist und daher auch als Sendelinse bezeichnet wird.

In Fig. 8 bis 12 sind verschiedene Positionen und Komponenten des optoelektronischen Sensors sowie entsprechende Achsen, Hilfslinien und Kurven eingezeichnet, welche nachfolgend im Einzelnen erläutert werden. Es werden drei verschiedene Fälle unterschieden, welche in Fig. 8 mit einem jeweiligen Index bezeichnet sind, wobei ein Fall "kurzer Arbeitsabstand" mit dem Index A, ein Fall "mittlerer Arbeitsabstand" mit dem Index B und ein Fall "unendlicher Arbeitsabstand" mit dem Index C bezeichnet ist. Es befindet sich die Lichtquelle an einem Punkt LQ, der Lichtempfänger an einem Punkt LE und die verschiebbare Sendeoptik oder Sendelinse in Abhängigkeit vom eingestellten Arbeitsabstand an einem Punkt $L_A$, $L_B$ oder $L_C$. Weiterhin sind die Empfangsachse E und die jeweiligen Sendeachsen $S_A$ bis $S_C$ dargestellt.

Für alle drei Fälle A bis C ergeben sich Geraden zwischen jeweiligen Hilfspunkten $HP_{A-C}$ und $L_{A-C}$, welche parallel zu der Linie LE - LQ verlaufen, wobei die Hilfspunkte $HP_{A-C}$ die Schnittpunkte dieser Geraden mit der Empfangsachse E darstellen. Die Geraden $HP_{A-C}$ - $L_{A-C}$ stellen eine jeweilige Triangulationsbasis dar und besitzen eine jeweilige Länge $b_A$, $b_B$ bzw. $b_C$. Weiterhin sind in Fig. 8 jeweilige Hilfsgeraden zwischen der Lichtquelle LQ und den Hilfspunkten $HP_{A-C}$ eingezeichnet, wobei der Abstand zwischen diesen Hilfsgeraden und den zugeordneten Linsenpositionen $L_{A-C}$ parallel zur Empfangsachse E gemessen jeweils der Brennweite f der Sendelinse entspricht.

Im Folgenden wird nun die Herleitung einer idealen Positionierungskurve P für den Fall B beschrieben. Die maßgeblichen Schnittpunkte sind in Fig. 8 für diesen Fall durch entsprechende Kreise markiert. Der Abstand $b_B$ wird zur Vereinfachung mit b bezeichnet. Für den Abstand zwischen den Punkten LE und $HP_B$ wird die Bezeichnung n und für den Abstand zwischen den Punkten LE und LQ, d.h. dem Abstand zwischen dem Lichtempfänger und der Lichtquelle, die Bezeichnung r eingeführt. Schließlich existiert als weiterer Bezugspunkt noch ein Schnittpunkt der für den betrachteten Fall maßgeblichen Sendeachse $S_B$ mit der Empfangsachse E, welcher der Arbeitspunkt des Sensors ist. Obwohl dieser Arbeitspunkt $AP_B$ sich eigentlich außerhalb des Zeichenbereichs befindet, ist dieser aus Gründen der Veranschaulichung an einem eigentlich falschen Ort in Fig. 8 eingezeichnet. Der Abstand zwischen dem Hilfspunkt $HP_B$ und dem Arbeitspunkt $AP_B$ wird mit d bezeichnet.

Gemäß dem Strahlensatz gilt die folgende Gleichung:

$$f/b = n/r \qquad\qquad (1a)$$

Ebenfalls aus dem Strahlensatz folgend ergibt sich die weitere Gleichung:

$$b/d = r/(n+d) \qquad\qquad (2a)$$

Die Gleichungen (1a) und (2a) beschreiben zunächst nur rein geometrische Längenverhältnisse. Zunächst soll gezeigt werden, dass für eine derartige Anordnung jeweils eine scharfe Abbildung der Lichtquelle im Arbeitspunkt erreicht wird. Hierfür werden die Gleichungen (1a) und (2a) zunächst umgeformt:

$$b/r = f/n \qquad\qquad (1b)$$

$$b/r = d/(n+d) \qquad\qquad (2b)$$

Durch Gleichsetzen und Umformen ergeben sich die folgenden Gleichungen:

$$f/n = d/(n+d) \qquad\qquad (3a)$$

$$1/f = (n+d)/(d \cdot n) \qquad\qquad (3b)$$

$$1/f = 1/d+1/n \qquad\qquad (3c)$$

Die Gleichung (3c) entspricht somit der Abbildungsgleichung oder Linsengleichung der geometrischen Optik für eine dünne Linse. Somit wird eine Lichtquelle, deren Abstand von einer Linse mit der Brennweite f gerade n ist, im Abstand d scharf abgebildet.

Auch wenn diese geometrischen Überlegungen beispielhaft nur für den Fall B angestellt wurden, gelten die entsprechenden Gleichungen für jede Position der Sendelinse auf der Positionierungskurve P.

Nachfolgend wird nun die Ermittlung einer idealen Positionierungskurve P erläutert. Zunächst wird ein kartesisches Koordinatensystem definiert, dessen Nullpunkt im Punkt LE liegt und dessen positive x-Richtung in Richtung des Hilfspunkts $HP_B$, d.h. in Richtung der Empfangsachse E und dessen positive y-Richtung in Richtung der Geraden LE - LQ verläuft. Damit weist eine jeweilige Position der Sendelinse $L_B$ die folgenden Koordinaten auf:

$$(x, y) = (n, b) \qquad\qquad (4a)$$

Zunächst soll b als Funktion von r, f und d bestimmt werden. Nach Umstellen von Gleichung (2b) ergibt sich:

$$n = d \cdot (r/b-1) \qquad\qquad (2c)$$

Durch Einsetzen von Gleichung (2c) in Gleichung (1b) ergibt sich:

$$b/r = f/(d*(r/b-1)) \qquad\qquad (5a)$$

$$b/r \cdot (d \cdot (r/b\text{-}1)) = f \qquad\qquad (5b)$$

$$d \cdot (1\text{-}b/r) = f \qquad\qquad (5c)$$

$$1\text{-}b/r = f/d \qquad\qquad (5d)$$

$$1\text{-}f/d = b/r \qquad\qquad (5e)$$

$$b = r \cdot (1\text{-}f/d) \qquad\qquad (5f)$$

Gleichung (1b) lässt sich umstellen zu:

$$n = r \cdot f/b \qquad\qquad (1c)$$

woraus sich zusammen mit Gleichung (5f) unmittelbar ergibt:

$$n = r \cdot f/(r \cdot (1\text{-}f/d)) \qquad\qquad (6a)$$

$$n = f/(1\text{-}f/d) \qquad\qquad (6b)$$

Somit ergibt sich für die ideale Positionierungskurve im Rahmen der beschriebenen Randbedingungen:

$$\begin{pmatrix} x \\ y \end{pmatrix} = \begin{pmatrix} \frac{f*d}{(d-f)} \\ r - \frac{r*f}{d} \end{pmatrix} \qquad\qquad (7a)$$

$$\begin{pmatrix} x \\ y \end{pmatrix} = \begin{pmatrix} f*\frac{1}{(1-\frac{f}{d})} \\ r - \frac{r*f}{d} \end{pmatrix} \qquad\qquad (7b)$$

Diese Funktion ist in Fig. 8 als Positionierungskurve P dargestellt.

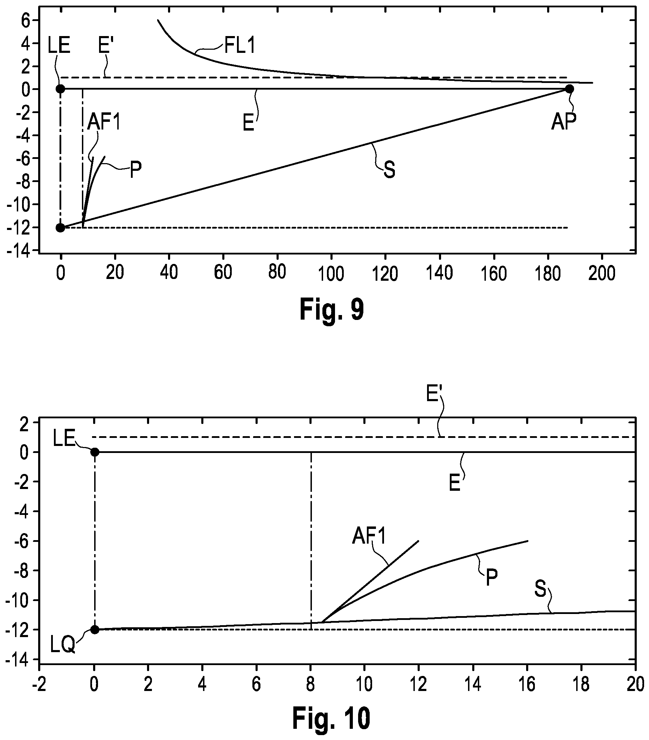

Mit Bezug auf Fig. 9 bis 12 wird nun die Ermittlung von Approximationsfunktionen für die ideale Positionierungskurve P beschrieben, um eine vereinfachte Trajektorie oder Positionierungskurve zu erhalten. Hierfür sollen exemplarisch zwei verschiedene Fälle betrachtet werden. Im ersten Fall soll eine Approximationsfunktion für einen Arbeitsabstand d = ∞ ermittelt werden, welcher auch durch die Bedingung f/d << 1 beschrieben werden kann. Für den zweiten Fall soll eine Approximationsfunktion für einen vorgegebenen Referenzarbeitspunkt $d_{Ref}$ ($d_{Ref}$ < ∞) ermittelt werden.

Der hier betrachtete erste Fall entspricht dem Fall A gemäß Fig. 8. Für diesen Fall **(f/d << 1)** kann der Term $\frac{1}{1-\frac{f}{d}}$ beispielsweise als eine geometrischen Reihe, eine Taylor-Reihe oder eine Laurent-Reihe entwickelt werden. In allen Fällen ergibt eine solche Reihenentwicklung für diesen Term in niedrigster Ordnung 1 + f/d + O((f/d)$^2$). Für die ap- proximative Positionierungskurve im Fall f/d << 1 ergibt sich somit:

$$\begin{pmatrix} x \\ y \end{pmatrix} \approx \begin{pmatrix} f*\left(1+\frac{f}{d}\right) \\ r - \frac{r*f}{d} \end{pmatrix} = \begin{pmatrix} f \\ r \end{pmatrix} + \frac{f}{d} * \begin{pmatrix} f \\ -r \end{pmatrix} \qquad\qquad (7c)$$

Diese Approximationsfunktion für den ersten Fall ist in Fig. 9 und 10 dargestellt und mit AF1 bezeichnet. Für eine anschaulichere Visualisierung ist der der Reihenentwicklung zugrundeliegende Arbeitspunkt AP nicht ganz korrekt wiederum in endlichem Abstand eingezeichnet.

Anschaulich betrachtet wird mit Gleichung (7c) eine Gerade mit einem Aufpunkt bei den Koordinaten (f, r) und

$$f$$

einem Richtungsvektor ( $-r$ ) definiert. Der Faktor vor dem Richtungsvektor erhält die für die Triangulation typische reziproke Abhängigkeit vom Arbeitsabstand d.

In Fig. 9 ist ferner für eine Verwendung der Approximationsfunktion AF1 als Positionierungskurve eine zugehörige Fokuspunktlinie FL1 dargestellt, welche die Positionen der verschiedenen Fokuspunkte in Abhängigkeit von d veranschaulicht. Die Fokuspunktlinie FL1 weist einen asymptotischen Verlauf auf und nähert sich für einen unendlichen Arbeitsabstand an die Empfangsachse E an, während zu kürzeren Arbeitsabständen hin die Abweichung größer wird.

Wie in Fig. 9 gut zu erkennen ist, kann durch eine veränderte Positionierung des Lichtempfängers bzw. der Empfangsoptik eine als gestrichelte Linie dargestellte optimierte Empfangsachse E' geschaffen werden, welche näher an der für die erste Approximationsfunktion AF1 ermittelten Fokuspunktlinie FL1 liegt und damit - bezogen auf einen ausgewählten Arbeitsabstandsbereich - eine geringere maximale Abweichung zur Fokuspunktlinie FL1 aufweist. Aus Fig. 9 wird ferner ersichtlich, dass eine weiter verbesserte Anpassung einer optimierten Empfangsachse E' an die Fokuspunktlinie FL1 durch ein leichtes Verkippen der Empfangsachse E' erreicht werden kann. Die Parallelverschiebung und/oder Verkippung der Empfangsachse E' erfolgt vorzugsweise statisch, um die Anzahl der Freiheitsgrade bei der Justage gering zu halten.

Aus Fig. 8 lässt sich ableiten, dass die Empfangsachse E eine Empfangsebene, die Linie $HP_A$ - $L_A$ eine Optikebene oder Hauptebene der Sendelinse und die Linie $HP_A$ - LQ eine Sendeebene oder Objektebene definiert, welche vertikal zu der Zeichnungsebene von Fig. 8 verlaufen und sich in einer gemeinsamen Geraden schneiden, welche mit der Zeichnungsebene von Fig. 8 den Schnittpunkt $HP_A$ bildet.

Daraus ergibt sich, dass die genannten Ebenen, die in Fig. 8 durch die Geraden E, $HP_A$ - $L_A$ und $HP_A$ - LQ repräsentiert sind, die Scheimpflugsche Bedingung erfüllen. Somit kann die Approximationsfunktion AF1 als eine Parallele zu der durch die Linie $HP_A$ - LQ referenzierten Objektebene aufgefasst werden. Die Linie $HP_A$ - LQ lässt sich

$$n$$

nämlich auch als eine Gerade mit dem Aufpunkt (r, 0) und dem gleichen Richtungsvektor ( $-r$ ) wie die Funktion AF1 beschreiben. Die Approximationsfunktion AF1 entspricht folglich einer um den Betrag f in x-Richtung verschobenen Objektebene oder Linie $HP_A$ - LQ. Daher stellt die mit Bezug auf Fig. 8 und 9 beschriebene Ermittlung der Approximationsfunktion AF1 zumindest indirekt eine Anwendung der Scheimpflug-Bedingung dar, wie sie mit Bezug auf Fig. 1 und 2 beschrieben wurde.

Bei der Ermittlung einer Approximationsfunktion für den zweiten Fall muss eine Reihenentwicklung um den vorgegebenen Arbeitsabstand $d_{Ref}$ vorgenommen werden. Hierfür gilt dann für die entsprechende Approximationsfunktion:

$$\begin{pmatrix} x \\ y \end{pmatrix} \approx \begin{pmatrix} \frac{f*d_{Ref}}{d_{Ref}-f} \\ r-\frac{f*r}{d_{Ref}} \end{pmatrix} + (d-d_{Ref}) * f * \begin{pmatrix} \frac{-f}{(d_{Ref}-f)^2} \\ \frac{r}{d_{Ref}^2} \end{pmatrix} \qquad (7d)$$

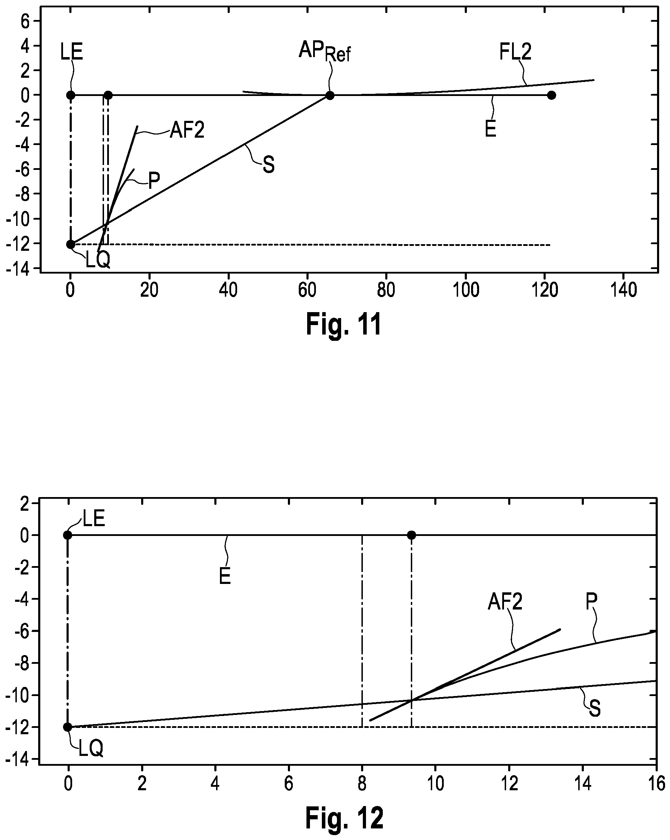

In Gleichung (7d) definiert der erste Vektor den Aufpunkt auf der idealen Positionierungskurve und der zweite Vektor den Richtungswinkel der Tangente. Die entsprechende Approximationsfunktion AF2 ist in Fig. 11 und 12 dargestellt. In Fig. 11 ist ferner der Referenzarbeitspunkt $AP_{Ref}$ für den gewählten Arbeitsabstand $d_{Ref}$ eingezeichnet. Ein Vergleich mit Fig. 9 und 10 zeigt, dass die Verwendung einer für einen mittleren Arbeitsabstand $d_{Ref}$ ermittelten Approximationsfunktion AF2 als Positionierungskurve eine etwas näher an der Empfangsachse E liegende Fokuspunktlinie FL2 ergibt.

Auch die in Fig. 11 und 12 dargestellte zweite Approximationsfunktion AF2 lässt sich als eine Parallele zu der durch die Hilfsgerade HP - LQ definierten Objektebene einer Scheimpflug-Konfiguration interpretieren.

Bezugszeichenliste

| | |
|---|---|
| 110 - 410 | optoelektronischer Sensor |
| 10, 10.1 - 10.4, LQ | Lichtquelle |
| 12, L, $L_A$ - $L_C$ | Sendeoptik |
| 14 | Sendelicht |
| 16 | Trägermodul |

| 20, LE | Lichtempfänger |
|---|---|
| 22 | Empfangsoptik |
| 26.1 | Fernelement |
| 26.2 | Nahelement |
| | |
| AF1, AF2 | Approximationsfunktion |
| AP, $AP_B$, $AP_{Ref}$ | Arbeitspunkt |
| E, E', E1, E2 | Empfangsachse |
| EE | Empfangsebene |
| FP, FP1 - FP4 | Fokuspunkt |
| FL1, FL2 | Fokuspunktlinie |
| $HP_A$ - $HP_C$ | Hilfspunkt |
| KG | Kollisionsgrenze |
| P, P', P" | Positionierungskurve |
| OE | Optikebene |
| S, S1 - S4, $S_A$ - $S_C$ | Sendeachse |
| SE | Sendeebene |
| SG | Schnittgerade |
| T | Triangulationsrichtung |

## Patentansprüche

1. Optoelektronischer Sensor (110 - 410) zum Erfassen von Objekten nach dem Triangulationsprinzip

   mit einer Sendeanordnung zum Aussenden von Sendelichtsignalen entlang einer Sendeachse (S, S1 - S4, $S_A$ - $S_C$), wobei die Sendeanordnung zumindest eine Lichtquelle (10, 10.1 - 10.4, LQ) und eine Sendeoptik (12, L, $L_A$ - $L_C$) umfasst, welche zum Fokussieren der von der zumindest einen Lichtquelle (10, 10.1 - 10.4, LQ) erzeugten Sendelichtsignale in einem Fokuspunkt (FP, FP1 - FP4) eingerichtet ist, und
   mit einer eine Empfangsachse (E, E', E1, E2) aufweisenden Empfangsanordnung, welche eine Empfangsoptik (22) zum Formen von Empfangslichtsignalen, welche von einem Objekt durch Remission auftreffender Sendelichtsignale erzeugt werden, und einen ortsauflösenden Lichtempfänger (20, LE) zum Empfangen der geformten Empfangslichtsignale umfasst, wobei eine Relativposition eines Austrittsorts der Sendelichtsignale aus der zumindest einen Lichtquelle (10, 10.1 - 10.4, LQ) bezogen auf die Sendeoptik (12, L, $L_A$ - $L_C$) derart wählbar ist, dass die Fokusweite, welche dem Abstand eines Fokuspunkts (FP, FP1 - FP4) von der Sendeoptik (12, L, $L_A$ - $L_C$) entspricht, auf einen gewünschten Wert einstellbar ist,
   wobei sich die verschiedenen Relativpositionen auf einer Positionierungskurve (P) befinden, welche derart gewählt ist, dass jeweilige der Positionierungskurve (P) zugeordnete Fokuspunkte (FP, FP1 - FP4) für verschiedene Fokusweiten auf einer Fokuspunktlinie (FL1, FL2) liegen,
   wobei die Fokuspunktlinie (FL1, FL2) einen Abstand von der Empfangsachse (E, E', E1, E2) aufweist, der zumindest innerhalb eines vorgegebenen Arbeitsabstandsbereichs derart minimiert ist, dass die Fokuspunktlinie (FL1, FL2) mit der Empfangsachse (E, E', E1, E2) zusammenfällt oder zumindest ein bestimmter vorgegebener Maximalabstand zwischen der Fokuspunktlinie (FL1, FL2) und der Empfangsachse (E, E', E1, E2) nicht überschritten wird,
   **dadurch gekennzeichnet, dass**
   die Lichtquelle (10, 10.1 - 10.4, LQ) und der Lichtempfänger (20, LE) in einer Triangulationsrichtung (T) voneinander beabstandet auf einem gemeinsamen Trägermodul (16) , bei dem es sich um eine Leiterplatte oder eine Elektronikkarte handelt, angeordnet sind.

2. Optoelektronischer Sensor (110 - 410) nach Anspruch 1,
   **dadurch gekennzeichnet,**
   **dass** die Positionierungskurve (P) entlang einer Geraden verläuft.

3. Optoelektronischer Sensor (110 - 410) nach einem der vorhergehenden Ansprüche,
   **dadurch gekennzeichnet,**
   **dass** die Sendeoptik (12, L, $L_A$ - $L_C$) eine Optikebene (OE) aufweist, dass die Positionierungskurve (P) der Relativpositionen in einer Sendeebene (SE) verläuft, dass die Empfangsachse (E, E', E1, E2) und/oder die Fokuspunktlinie (FL1, FL2) in einer Empfangsebene (EE) verlaufen, und dass sich die Sendeebene (SE), die Optikebene (OE) und die Empfangsebene (EE) in einer gemeinsamen Schnittgeraden (SG) schneiden.

4. Optoelektronischer Sensor (110 - 410) nach einem der vorhergehenden Ansprüche,
**dadurch gekennzeichnet,**
**dass** die Lichtquelle (10, 10.1 - 10.4, LQ) entlang der Positionierungskurve (P) verschiebbar ist.

5. Optoelektronischer Sensor (110 - 410) nach Anspruch 1 oder 2,
**dadurch gekennzeichnet,**
**dass** die Sendeoptik (12, L, $L_A$ - $L_C$) entlang der Positionierungskurve (P) verschiebbar ist.

6. Optoelektronischer Sensor (110 - 410) nach einem der vorhergehenden Ansprüche,
**dadurch gekennzeichnet,**
**dass** das Trägermodul (16) entlang der Positionierungskurve (P) verschiebbar ist.

7. Optoelektronischer Sensor (110 - 410) nach Anspruch 6,
**dadurch gekennzeichnet,**
**dass** die Empfangsoptik (22) derart mit dem Trägermodul (16) gekoppelt ist, dass sich bei einem Verschieben des Trägermoduls (16) die Winkellage der Empfangsachse (E, E', E1, E2) nicht ändert.

8. Optoelektronischer Sensor (110 - 410) nach einem der vorhergehenden Ansprüche,
**dadurch gekennzeichnet,**
**dass** die Positionierungskurve (P) durch eine lineare oder nichtlineare Approximationsfunktion (AF1, AF2) definiert ist, welche eine ideale Positionierungskurve (P) in einem Berührungspunkt tangential berührt, wobei die ideale Positionierungskurve (P) durch diejenigen Relativpositionen definiert ist, für welche die Fokuspunktlinie (FL1, FL2) mit der Empfangsachse (E, E', E1, E2) zusammenfällt.

9. Optoelektronischer Sensor (110 - 410) nach Anspruch 8,
**dadurch gekennzeichnet,**
**dass** der Berührungspunkt für diejenige Relativposition ausgewählt ist, für welche die Fokusweite unendlich ist oder einem vorgegebenen Referenzarbeitspunkt (AP, $AP_B$, $AP_{Ref}$) entspricht.

10. Optoelektronischer Sensor (110 - 410) nach Anspruch 8,
**dadurch gekennzeichnet,**
**dass** der Berührungspunkt der Approximationsfunktion (AF1, AF2) derart ausgewählt ist, dass für den ausgewählten Berührungspunkt ein maximaler Abstand der zugeordneten Fokuspunktlinie (FL1, FL2) von der Empfangsachse (E, E', E1, E2) innerhalb des vorgegebenen Arbeitsabstandsbereichs minimal wird.

11. Optoelektronischer Sensor (110 - 410) nach einem der vorhergehenden Ansprüche,
**dadurch gekennzeichnet,**
**dass** der Abstand der Fokuspunktlinie (FL1, FL2) von der Empfangsachse (E) zusätzlich mittels eines Verschiebens und/oder eines Verkippens der Empfangsachse (E) minimiert ist, wobei durch das Verschieben oder Verkippen der Empfangsachse (E), welches mittels einer angepassten Positionierung des Lichtempfängers (20, LE) oder der Empfangsoptik (22) erfolgt, eine optimierte Empfangsachse (E') geschaffen wird, welche im Vergleich zu der nicht verschobenen oder nicht verkippten Empfangsachse (E) eine geringere maximale Abweichung von der Fokuspunktlinie (FL1, FL2) aufweist.

**Claims**

1. An optoelectronic sensor (110 - 410) for detecting objects in accordance with the triangulation principle, said optoelectronic sensor (110 - 410) comprising

   a transmission arrangement for transmitting transmission light signals along a transmission axis (S, S1 - S4, $S_A$ - $S_C$), wherein the transmission arrangement comprises at least one light source (10, 10.1 - 10.4, LQ) and a transmission optics (12, L, $L_A$ - $L_C$) which is configured for focusing the transmission light signals generated by the at least one light source (10, 10.1 - 10.4, LQ) at a focus point (FP, FP1 - FP4), and
   a reception arrangement which has a reception axis (E, E', E1, E2) and which comprises a reception optics (22) for forming reception light signals, which are generated by an object by a remission of incident transmission light signals, and a spatially resolving light receiver (20, LE) for receiving the formed reception light signals,
   wherein a relative position of an exit location of the transmission light signals from the at least one light source (10, 10.1 - 10.4, LQ) relative to the transmission optics (12, L, $L_A$ - $L_C$) can be selected such that the focus width, which corresponds to the distance of a focus point (FP, FP1 - FP4) from the transmission optics (12, L, $L_A$ - $L_C$), can be set to a desired value, wherein the different relative positions are located on a positioning curve (P) which is selected such that respective focus points (FP, FP1 - FP4) associated with the positioning curve (P) lie on a focus point line (FL1, FL2) for different focus widths,

wherein the focus point line (FL1, FL2) has a distance from the reception axis (E, E', E1, E2) that is minimized at least within a predefined working distance range such that the focus point line (FL1, FL2) coincides with the reception axis (E, E', E1, E2) or at least a certain predefined maximum distance between the focus point line (FL1, FL2) and the reception axis (E, E', E1, E2) is not exceeded,

**characterized in that**

the light source (10, 10.1 - 10.4, LQ) and the light receiver (20, LE) are arranged spaced apart from one another in a triangulation direction (T) on a common carrier module (16) which is a circuit board or an electronic card.

2. An optoelectronic sensor (110 - 410) according to claim 1,
**characterized in that**
the positioning curve (P) extends along a straight line.

3. An optoelectronic sensor (110 - 410) according to one of the preceding claims,
**characterized in that**
the transmission optics (12, L, $L_A$ - $L_C$) has an optics plane (OE), **in that** the positioning curve (P) of the relative positions extends in a transmission plane (SE), **in that** the reception axis (E, E', E1, E2) and/or the focus point line (FL1, FL2) extends/extend in a reception plane (EE), and **in that** the transmission plane (SE), the optics plane (OE) and the reception plane (EE) intersect in a common intersection line (SG).

4. An optoelectronic sensor (110 - 410) according to any one of the preceding claims,
**characterized in that**
the light source (10, 10.1 - 10.4, LQ) is displaceable along the positioning curve (P).

5. An optoelectronic sensor (110 - 410) according to claim 1 or 2,
**characterized in that**
the transmission optics (12, L, $L_A$ - $L_C$) is displaceable along the positioning curve (P).

6. An optoelectronic sensor (110 - 410) according to any one of the preceding claims,
**characterized in that**
the carrier module (16) is displaceable along the positioning curve (P).

7. An optoelectronic sensor (110 - 410) according to claim 6,
**characterized in that**
the reception optics (22) is coupled to the carrier module (16) such that the angular position of the reception axis (E, E', E1, E2) does not change on a displacement of the carrier module (16).

8. An optoelectronic sensor (110 - 410) according to any one of the preceding claims,
**characterized in that**
the positioning curve (P) is defined by a linear or non-linear approximation function (AF1, AF2) which tangentially contacts an ideal positioning curve (P) at a contact point, with the ideal positioning curve (P) being defined by those relative positions for which the focus point line (FL1, FL2) coincides with the reception axis (E, E', E1, E2).

9. An optoelectronic sensor (110 - 410) according to claim 8,
**characterized in that**
the contact point is selected for that relative position for which the focus distance is infinite or corresponds to a predefined reference working point (AP, $AP_B$, $AP_{Ref}$).

10. An optoelectronic sensor (110 - 410) according to claim 8,
**characterized in that**
the contact point of the approximation function (AF1, AF2) is selected such that, for the selected contact point, a maximum distance of the associated focus point line (FL1, FL2) from the reception axis (E, E', E1, E2) becomes minimal within the predefined working distance range.

**11.** An optoelectronic sensor (110 - 410) according to any one of the preceding claims,
**characterized in that**
the distance of the focus point line (FL1, FL2) from the reception axis (E) is additionally minimized by means of a displacement and/or a tilting of the reception axis (E), with an optimized reception axis (E'), which has a smaller maximum deviation from the focus point line (FL1, FL2) compared to the non-displaced or non-tilted reception axis (E), being provided by the displacement or tilting of the reception axis (E) that takes place by means of an adapted positioning of the light receiver (20, LE) or the reception optics (22).

**Revendications**

**1.** Capteur optoélectronique (110 - 410) pour détecter des objets selon le principe de la triangulation,

comprenant un ensemble d'émission pour émettre des signaux lumineux d'émission le long d'un axe d'émission $(S, S1 - S4, S_A - S_C)$, l'ensemble d'émission comprenant au moins une source de lumière (10, 10.1 - 10.4, LQ) et une optique d'émission $(12, L, L_A - L_C)$ conçue pour focaliser les signaux lumineux d'émission, générés par ladite au moins une source de lumière (10, 10.1 - 10.4, LQ), en un point focal (FP, FP1 - FP4), et comprenant un ensemble de réception qui présente un axe de réception (E, E', E1, E2) et qui comprend une optique de réception (22) pour former des signaux lumineux de réception, générés par un objet par renvoi de signaux lumineux d'émission incidents, et un récepteur de lumière à résolution locale (20, LE) pour recevoir les signaux lumineux de réception formés, dans lequel
une position relative d'un emplacement de sortie des signaux lumineux d'émission de ladite au moins une source de lumière (10, 10.1 - 10. 4, LQ) par rapport à l'optique d'émission $(12, L, L_A - L_C)$ peut être choisie de telle sorte que la distance focale qui correspond à la distance d'un point focal (FP, FP1 - FP4) par rapport à l'optique d'émission $(12, L, L_A - L_C)$ peut être réglée à une valeur souhaitée,
les différentes positions relatives se trouvent sur une courbe de positionnement (P) choisie de telle sorte que des points focaux respectifs (FP, FP1 - FP4) associés à la courbe de positionnement (P) pour différentes distances focales se trouvent sur une ligne de points focaux (FL1, FL2),
la ligne de points focaux (FL1, FL2) présente une distance par rapport à l'axe de réception (E, E', E1, E2) qui est minimisée au moins au sein d'une plage de distance de travail prédéfinie, de telle sorte que la ligne de points focaux (FL1, FL2) coïncide avec l'axe de réception (E, E', E1, E) ou
qu'au moins une certaine distance maximale prédéfinie entre la ligne de points focaux (FL1, FL2) et l'axe de réception (E, E', E1, E2) ne soit pas dépassée,
**caractérisé en ce que**
la source de lumière (10, 10.1 - 10.4, LQ) et le récepteur de lumière (20, LE) sont disposés à distance l'un de l'autre dans une direction de triangulation (T) sur un module de support commun (16) qui est une carte à circuit imprimé ou une carte électronique.

**2.** Capteur optoélectronique (110 - 410) selon la revendication 1,
**caractérisé en ce que**
la courbe de positionnement (P) s'étend le long d'une ligne droite.

**3.** Capteur optoélectronique (110 - 410) selon l'une des revendications précédentes,
**caractérisé en ce que**
l'optique d'émission $(12, L, L_A - L_C)$ présente un plan d'optique (OE), **en ce que** la courbe de positionnement (P) des positions relatives s'étend dans un plan d'émission (SE), **en ce que** l'axe de réception (E, E', E1, E2) et/ou la ligne de points focaux (FL1, FL2) s'étendent dans un plan de réception (EE), et **en ce que** le plan d'émission (SE), le plan d'optique (OE) et le plan de réception (EE) se coupent dans une droite d'intersection commune (SG).

**4.** Capteur optoélectronique (110 - 410) selon l'une des revendications précédentes,
**caractérisé en ce que**
la source de lumière (10, 10.1 - 10.4, LQ) peut être déplacée le long de la courbe de positionnement (P).

**5.** Capteur optoélectronique (110 - 410) selon la revendication 1 ou 2,
**caractérisé en ce que**
l'optique d'émission $(12, L, L_A - L_C)$ peut être déplacée le long de la courbe de positionnement.

**6.** Capteur optoélectronique (110 - 410) selon l'une des revendications précédentes,

**caractérisé en ce que**
le module de support (16) peut être déplacé le long de la courbe de positionnement (P).

7. Capteur optoélectronique (110 - 410) selon la revendication 6,
**caractérisé en ce que**
l'optique de réception (22) est couplée au module de support (16) de telle sorte que la position angulaire de l'axe de réception (E, E', E1, E2) ne change pas lors d'un déplacement du module de support (16).

8. Capteur optoélectronique (110 - 410) selon l'une des revendications précédentes,
**caractérisé en ce que**
la courbe de positionnement (P) est définie par une fonction d'approximation linéaire ou non linéaire (AF1, AF2) qui touche tangentiellement une courbe de positionnement idéale (P) en un point de contact, la courbe de positionnement idéale (P) étant définie par les positions relatives pour lesquelles la ligne de points focaux (FL1, FL2) coïncide avec l'axe de réception (E, E', E1, E2).

9. Capteur optoélectronique (110 - 410) selon la revendication 8,
**caractérisé en ce que**
le point de contact est choisi pour la position relative pour laquelle la distance focale est infinie ou correspond à un point de travail de référence pré-défini (AP, $AP_B$, $AP_{Ref}$).

10. Capteur optoélectronique (110 - 410) selon la revendication 8,
**caractérisé en ce que**
le point de contact de la fonction d'approximation (AF1, AF2) est choisi de telle sorte que, pour le point de contact choisi, une distance maximale de la ligne de points focaux associée (FL1, FL2) par rapport à l'axe de réception (E, E', E1, E2) au sein de la plage de distance de travail prédéfinie devient minimale.

11. Capteur optoélectronique (110 - 410) selon l'une des revendications précédentes,
**caractérisé en ce que**
la distance de la ligne de points focaux (FL1, FL2) par rapport à l'axe de réception (E) est en outre minimisée au moyen d'un déplacement et/ou d'un basculement de l'axe de réception (E), sachant que le déplacement et/ou le basculement de l'axe de réception (E) qui s'effectue au moyen d'un positionnement adapté du récepteur de lumière (20, LE) ou de l'optique de réception (22) procure un axe de réception optimisé (E') qui, par comparaison à l'axe de réception (E) non déplacé ou non basculé, présente un écart maximal plus faible par rapport à la ligne de points focaux (FL1, FL2).

**Fig. 1**

**Fig. 2**

**Fig. 3**

**Fig. 4**

**Fig. 5**

Fig. 6

Fig. 7

**Fig. 8**

**Fig. 9**

**Fig. 10**

**Fig. 11**

**Fig. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2924685 A1
- DE 10006321 A1
- DE 19821112 C1
- DE 102015009619 A1
- EP 2159599 B1